# EUROPEAN PATENT APPLICATION

(11) **EP 3 065 064 A1**
(43) Date of publication of application: **07.09.2016**
(21) Application number: 13896778.1
(22) Date of filing: 29.10.2013
(51) Int. Cl.: G06F 17/30

(54) **METHOD AND DEVICE FOR FORWARDING INFORMATION**

(71) Applicant: Yulong Computer Telecommunication Scientific (Shenzhen) Co., Ltd., Shenzhen, Guangdong 518057 (CN)
(72) Inventor: ZHOU, Changzhan, Shenzhen Guangdong 518057 (CN)
(74) Representative: Johnson, Richard Alan
(86) International application number: PCT/CN2013/086165
(87) International publication number: WO 2015/061969

(57) **Abstract**

Disclosed in the present invention are a method and device for forwarding information, which relate to the technical field of telecommunications and solve the problems that the information that a certain user has released may be propagated within a relatively small range and more operation cost may be consumed during the propagation. Specifically, the method of the present invention may comprise: a network server receiving the information of the friendship circle released by a first user; judging whether a second user in the friendship circle of the first user has opened his or her own friendship circle permission to the first user; if yes, sending the information of the friendship circle released by the first user to a third user in the friendship circle of the second user, wherein the third user is not a user who belongs to the friendship circle of the first user. The invention may be applied to forward information.

## Description

### FIELD OF THE INVENTION

The present disclosure relates to the technical field of telecommunication, and particularly to a method and device for forwarding information.

### BACKGROUND

At present, when propagating information through a Social Networking Services (SNS) application or platform, an Identity (ID) will be needed for everyone in the first place. People can register a user and then build their own social circle or friendship circle based on the registered user (for example, add as friend, follow, and etc.), wherein at least one friend will be included in the social circle.

User A can release information in his or her social circle, and friends (such as Friend B) in the social circle of User A will see the information; Friend B can forward the information if he or she is interested in it so that friends (such as Friend C) in the social circle of User B will see the information.

During the above-mentioned process of forwarding information, the inventor of the present invention found that, the following problems are existed in the related art: the propagation range of the released information depends solely on the size of the social circle of the user (that is to say, depends on the number of friends in the social circle), and even after forwarding, the range is still very limited. Moreover, the possibility of a secondary transmission (that is, the process of forwarding information by friends in the social circle) is very small because of the limited receiver of the first transmission (that is, the process of releasing information by a user), besides, operation cost will be consumed during the secondary transmission, for example, Friend B has to "Forward" or "Share."

### SUMMARY

The present invention aims to provide a method and device for forwarding information, which can expand the range of information propagation without increasing the operation cost.

In order to achieve these aims, the following technical schemes are adopted in the embodiments of the invention.

According to one aspect of the invention, it is provided a method for forwarding information, which comprises:
a network server receiving the information of the friendship circle released by a first user;
judging whether a second user in the friendship circle of the first user has opened his or her own friendship circle permission to the first user; and
if yes, sending the information of the friendship circle released by the first user to a third user in the friendship circle of the second user, wherein the third user is not a user who belongs to the friendship circle of the first user.

According to another aspect of the invention, it is provided a device for forwarding information, which comprises:
a receiving unit, configured to receive the information of the friendship circle released by a first user;
a judging unit, configured to judge whether a second user in the friendship circle of the first user has opened his or her own friendship circle permission to the first user; and
a sending unit, configured to send the information of the friendship circle released by the first user to a third user in the friendship circle of the second user if the judgement result of the judging unit is yes, wherein the third user is not a user who belongs to the friendship circle of the first user.

By means of the method and device according to the embodiments of the invention, the network server can receive the information of the friendship circle released by the first user, and judge whether the second user in the friendship circle of the first user has opened his or her own friendship circle permission to the first user, and if yes, send the information of the friendship circle released by the first user to the third user in the friendship circle of the second user, wherein the third user is not a user who belongs to the friendship circle of the first user. In this way, even if the second user does not forward the information released by the first user, the network server can send the information to the friendship circle opened by the second user, that is to say, the information released by the first user will be received by users in the friendship circle opened by the second user, and the range of information propagation is expanded without increasing the operation cost.

### BRIEF DESCRIPTION OF THE DRAWINGS

The technical solution of the present invention or the related art will be more clearly understood from the following detailed description taken in conjunction with the accompanying drawings; it will be apparent to one of ordinary skill in the art that the accompanying drawings described below are merely embodiments of the invention and other drawings can be obtained out of them, in which:
FIG. 1 is a flowchart illustrating a method for forwarding information according to an embodiment of the invention;
FIG. 2 is a flowchart illustrating another method for forwarding information according to an embodiment of the invention;
FIG. 3 is a flowchart illustrating a method for opening the friendship circle permission to the first user by the second user according to an embodiment of the invention;
FIG. 4 is a flowchart illustrating another method for opening the friendship circle permission to the first user by the second user according to an embodiment of the invention;
FIG. 5a is a structural schematic diagram illustrating the propagation range of the information released by User A in the related art;
FIG. 5b is a structural schematic diagram illustrating the propagation range of the information released by User A in the method of FIG. 3;
FIG. 6 is a structural schematic diagram illustrating a device for forwarding information according to an embodiment of the invention; and
FIG. 7 is a structural schematic diagram illustrating another device for forwarding information according to an embodiment of the invention.

### DETAILED DESCRIPTION OF ILLUSTRATED EMBODIMENTS

The foregoing descriptions are merely preferred embodiments rather than limitations of the present disclosure. Various modifications and alterations may be made to the present disclosure for those skilled in the art. Any modification, equivalent substitution, improvement or the like made within the spirit and principle of the present disclosure shall fall into the protection scope of the present disclosure.

In the related art, as mentioned above, the propagation range of the released information depends solely on the size of the social circle of the user (that is to say, depends on the number of friends in the social circle), and even after forwarding, the range is still very limited. Moreover, the possibility of a secondary transmission (that is, the process of forwarding information by friends in the social circle) is very small because of the limited receiver of the first transmission (that is, the process of releasing information by a user), besides, operation cost will be consumed during the secondary transmission, for example, Friend B has to "Forward" or "Share."

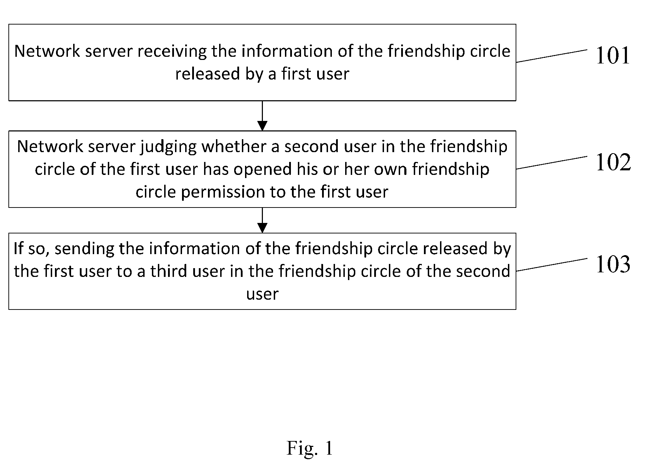

In order to solve the problems described above, one embodiment of the invention provides a method for forwarding information. As shown in FIG. 1, the method comprises:
101, a network server receiving the information of the friendship circle released by a first user.

When propagating information through the Social Networking Services (SNS) application or platform, people can register an account and release, forward, or browse information under the registered account, or people can build their own friendship circle in which at least two users are included. After being released or forwarded by a user in the friendship circle, the information can be received by all users in the friendship circle of the said user.

102, the network server judging whether a second user in the friendship circle of the first user has opened his or her own friendship circle permission to the first user.

103, if yes, the network server sending the information of the friendship circle released by the first user to a third user in the friendship circle of the second user, wherein the third user is not a user who belongs to the friendship circle of the first user.

It should be noted that, in the present invention, based on the scope of the friendship circle permission of the second user opened to the first user, the third user can be one or more users in the friendship circle of the second user.

In this embodiment, if the friendship circle permission of the second user has been opened to the first user, then after receiving the information of the friendship circle released by the first user, the network server can search for the second user and the third user in the friendship circle opened to the first user by the second user, and then send the above information to the third user. In this way, after being released or forwarded by the first user, the information will be received by all the third users in the friendship circle opened by the second user.

By adopting the above scheme, after being released by the first user, the information of the friendship circle will be sent by the network server to the third user in the friendship circle opened to the first user by the second user, and there is no need for the second user to perform operations such as forward, that is, users in the friendship circle opened by the second user can receive the information of the friendship circle released by the first user, thereby expanding the range of information propagation without increasing the operation cost.

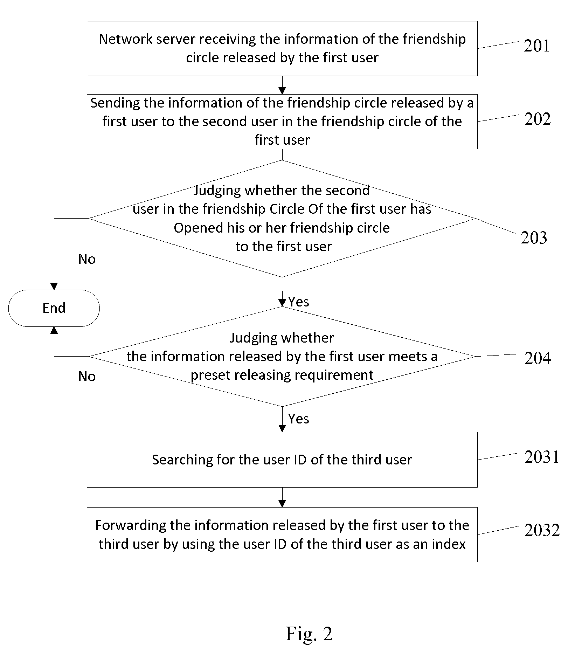

FIG. 2 illustrates another method for forwarding information according to an embodiment of the invention, which is a further expansion and optimization of the method as shown in FIG. 1 and comprises:
201, a network server receiving the information of the friendship circle released by a first user.
202, sending the above information to a second user in the friendship circle of the first user.

In this embodiment, the second user can be any one or more users in the friendship circle of the first user.

As a realization, the corresponding relationship between the first user and the second user can be stored in the network server, after receiving the information of the friendship circle of the first user, the network server will search the friendship circle of the first user, that is, search for the second user corresponding to the first user, and then send the information of the friendship circle released by the first user to all users (include the second user) in the friendship circle of the first user.

It should be emphasized that the information released by the first user includes but is not limited to the information created by the first user; it can also be the information forwarded by the first user.

203, judging whether a second user in the friendship circle of the first user has opened his or her own friendship circle permission to the first user; if yes, proceeds to step 204, otherwise, the process ends.

In this embodiment, in order to expand the range of information propagation, the second user can open his or her own friendship circle to the first user, that is, open the permission of the third user to the first user; thus, after being released by the first user, the information will be received by not only the users (include the second user) in the friendship circle of the first user, but also the third user in the friendship circle opened by the second user. In other words, the information released by the first user will be propagated in the friendship circle of the first user as well as the friendship circle of the second user. Compared with the situation where the permission of the third user is not opened, the propagation range of the information released by the first user is expanded.

In order to facilitate the subsequent operations, first of all, the network server should determine whether the second user has opened his or her own friendship circle permission to the first user.

As a realization of this embodiment, if the second user has opened his or her own friendship circle permission to the first user, the corresponding relationship between the first user and the third user will be stored in the network server. Thus, the network server can determine whether a third user corresponding to the first user has been stored; if yes, the second user has opened his or her own friendship circle permission to the first user, otherwise, the second user has not opened his or her own friendship circle permission to the first user.

The following is a description of the method of opening the friendship circle permission of the second user to the first user, wherein this step can be performed before or after step 201.

Specifically, the method of opening the friendship circle permission of the second user to the first user comprises: the second user opening his or her own friendship circle permission to the first user in a passive way; or, the second user opening his or her own friendship circle permission to the first user on his or her own initiative.

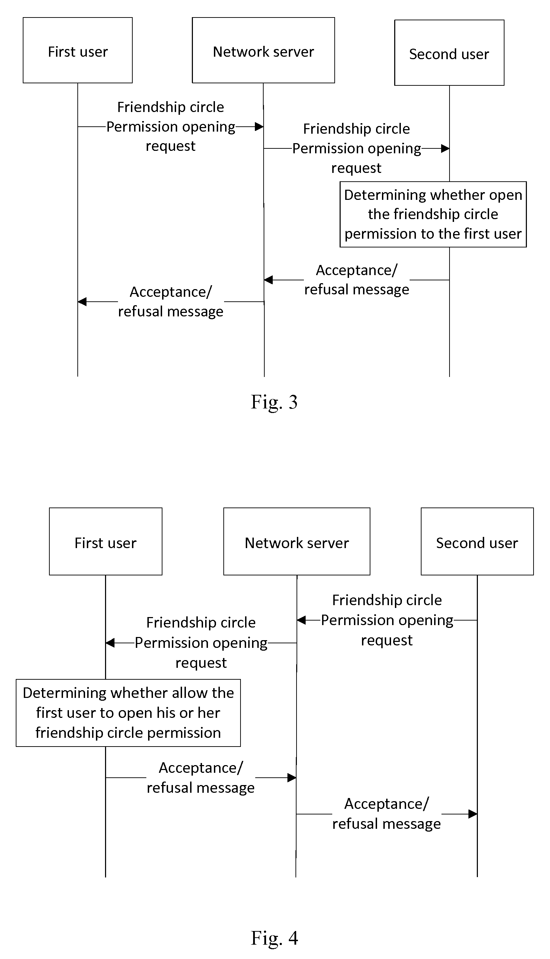

As illustrated in FIG.3, the step in which the second user opens his or her own friendship circle permission to the first user in a passive way can include but is not limited to:

A friendship circle permission opening request is received by the network server from the first user, wherein the above request is used to instruct the second user to open all or part of the designated friends in the friendship circle thereof as the third user to the first user. The network server forwards the request to the second user, and judges whether the request is accepted; if yes, the network server records the first user and the third user in association with each other, and optionally, sends an acceptance message to the first user; otherwise, the network server sends a refusal message to the first user.

The step in which the first user and the third user are recorded in association with each other includes but is not limited to: the corresponding relationship of the first user and the third user is recorded in association with each other, as a result, if the network server wants to forward the information of the friendship circle released by the first user to the second user, it will need to acquire the third user corresponding to the first user and forward the information released by the first user to the third user.

As illustrated in FIG.4, the step in which the second user opens his or her own friendship circle permission to the first user on his or her own initiative can include but is not limited to:

A friendship circle permission opening request is received by the network server from the second user, the above request is used to request to open all or part of the designated friends in the friendship circle of the second user as the third user to the first user. The network server forwards the request to the first user, and judges whether the request is accepted; if yes, the network server records the first user and the third user in association with each other, and optionally, sends an acceptance message to the second user; otherwise, the network server sends a refusal message to the second user.

As a realization of this embodiment, the second user can determine whether to open the permission of the third user to the first user based on the gender, preference, age, and other factors of the first user.

For example, if the first user prefers photography and often releases or forwards information about it, the second user can choose friends who prefer photography from his or her own friendship circle as the third user. As a further example, the first user can be provided with basic information (such as high school, college school, etc.), and the second user can choose friends who have the same or some of the same basic information with the first user from his or her own friendship circle as the third user.

In the embodiments of the invention, there is no restriction on the friendship circle and it can be set according to actual needs, for example, it can be the friendship circle of an address book or social apps, or, it can be one-way followed friends or two-way followed friends in the micro-blog.

Moreover, the second user can have discretion in determining whether to open the friendship circle to the first user.

For example, the second user can determine whether to open the friendship circle permission to the first user based on his or her reputation (this is an example and the present invention is not limited thereto). Specifically, refuse to open the friendship circle permission if the first user has bad reputation or poor evaluation, and optionally, a refusal message can be sent to the first user.

In order to avoid spam being sent to the third user, the second user can set the type of the information that is not allowed to be sent to the third user and so on, and transmit the setting to the network server, such that after receiving an information releasing request from the first user, the network server can determine whether to forward the information released by the first user to the third user according to the setting.

For example, if the third user prefers photography, the setting can be that, only photography related information can be sent to the third user.

In the embodiments of the invention, there is no restriction on the method of setting the type of the information that is not allowed to be sent to the third user, and it can be set according to actual needs, no further description is provided for the sake of clarity.

204, judging whether the information released by the first user meets a preset releasing requirement; if yes, proceeds to step 2031, otherwise, the process ends.

As a realization of this embodiment, the preset releasing requirement can includes but is not limited to: the number of times of forwarding, charging, the number of times of collection, and the type of the information released by the first user, and so on.

For example, if the preset releasing requirement is that the number of times of forwarding of the information should be greater than 50, then after receiving the information releasing request from the first user, the network server will judge whether the number of times of forwarding of the information released by the first user is greater than 50, and if yes, the requirement is met. As a further example, if the preset releasing requirement is that the fee charged for acquiring information should be less than 3 dollar, then after receiving the information releasing request from the first user, the network server will judge whether the fee charged for acquiring the information released by the first user is less than 3 dollar, and if yes, the requirement is met.

In the embodiments of the invention, there is no restriction on the method of judging whether the information released by the first user meets the preset releasing requirement, and it can be set according to actual needs, no further description is provided for the sake of clarity.

The step 203 described above can also be achieved through the following way, comprises:

2031, searching for the user ID (user identification) of the third user.

As a realization of this embodiment, if the second user decides to open the friendship circle permission to the first user, the network server can record the first user and the third user in association with each other, for example, the corresponding relationship between the first user and the third user can be stored in a forwarding relationship table. Thus, after receiving the information releasing request from the first user and forwarding the information released by the first user to the second user, the network server can search the forwarding relationship table for the user ID of the third user corresponding to the first user.

In the embodiments of the invention, as to the method of searching for the user ID of the third user as well as the storage location of the user ID, there is no restriction, and it can be set according to actual needs, no further description is provided for the sake of clarity.

2032, forwarding the information released by the first user to the third user by using the user ID of the third user as an index.

The user ID of the first user (for example, the name, the web link corresponding to the first user ) may be included in the information released by the first user, thus, after receiving the information, the third user can establish connection with the first user, thereby expanding the friendship circle thereof.

By means of the scheme described above, the network server can receive the information of the friendship circle released by the first user, search for the second user and forward the information released by the first user thereto. Besides, the network server can judge whether the second user in the friendship circle of the first user has opened his or her friendship circle permission to the first user; if yes, the information released by the first user will be sent to the third user in the friendship circle of the second user, wherein the third user is not a user who belongs to the friendship circle of the first user. In this way, after being released by the first user, the information will be sent by the network server to, not only the second user (the step of sending the information released by the first user to the second user is not provided for the sake of clarity), but also the friendship circle opened by the second user, and there is no need for the second user to perform operations such as forward. That is to say, users in the friendship circle opened by the second user will receive the information released by the first user, and the range of information propagation is expanded without increasing the operation cost.

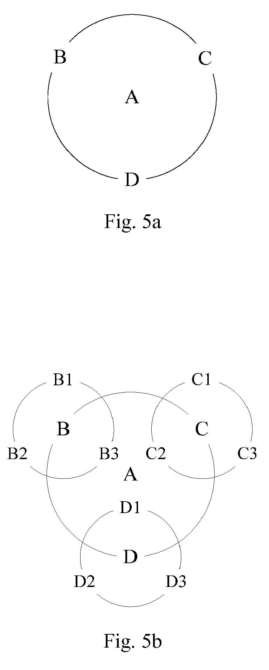

For example, as shown in FIG. 5a, users in the friendship circle of User A include but are not limited to: User B, User C, and User D. In the related art, after being released or forwarded by User A, the information can only be received by User B, User C, and User D. As shown in FIG. 5b, by means of the scheme of the embodiments of the invention, after being released or forwarded by User A, the information will be received by not only User B, User C, and User D, but also users (for example, include but are limited to User D1, User D2, User D3, User C1, User C2, User C3, User B1, User B2, User B3, etc.) in the friendship circle of User B, User C, and User D.

Moreover, the second user can select the third user according to the first user and preset a releasing requirement, the information released by the first user will not be sent to the third user if it does not meets the preset releasing requirement, thus avoid spam being sent to the third user.

In the following, several examples are provided in order to facilitate the understanding of the above embodiments, but the application of the embodiments is not limited thereto.

### Example 1

User A belongs to a photography circle SNS, after finding a photography platform which publishes good photography skills and works regularly, User A can open the permission of the photography circle SNS to the photography platform, then users in the photography circle SNS will receive the information released by the photography platform.

### Example 2

Both User C and User D do business on a social shopping site, and the site is provided with a social shopping circle in which User C and User D are included, that is, User C and User D are friends in the social shopping circle. Rely on the personal reputation and product quality, User C and User D opened their respective friendship circle permission to each other; thus, the product information released by User C will be received by all users in the friendship circle of User D, and vice versa.

Provided in the following are several device embodiments, which corresponding to the method embodiments described above respectively.

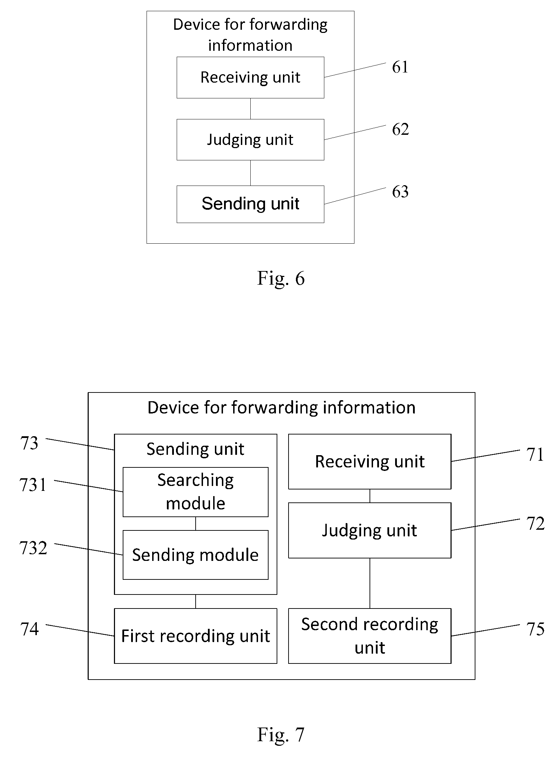

As shown in FIG. 6, the present embodiment provides a device for forwarding information, which comprises:
a receiving unit 61, configured to receive the information of the friendship circle released by a first user;
a judging unit 62, configured to judge whether a second user in the friendship circle of the first user has opened his or her own friendship circle permission to the first user; and
a sending unit 63, configured to send the information of the friendship circle released by the first user to a third user in the friendship circle of the second user if the judgement result of the judging unit 62 is yes, wherein the third user is not a user who belongs to the friendship circle of the first user.

Thus, the following scheme is achieved, that is, the receiving unit, configured to receive the information of the friendship circle released by the first user; the judging unit, configured to judge whether the second user in the friendship circle of the first user has opened his or her own friendship circle permission to the first user; and the sending unit, configured to send the information of the friendship circle released by the first user to the third user in the friendship circle of the second user if the judgement result of the judging unit is yes, wherein the third user is not a user who belongs to the friendship circle of the first user; wherein the sending unit is further configured to search for the second user and send the information released by the first user to the second user. By means of the scheme described above, after being released by the first user, the information can be sent to the friendship circle opened by the second user through the network server without performing operations (such as forward) by the second user, that is to say, users in the friendship circle opened by the second user can receive the information released by the first user, and the range of information propagation is expanded without increasing the operation cost.

As shown in FIG. 7, it is provided a device for forwarding information, which is a further expansion and optimization of the device of FIG.6 and may comprise:
a receiving unit 71, configured to receive the information released by a first user;
a judging unit 72, configured to judge whether a second user in the friendship circle of the first user has opened his or her own friendship circle permission to the first user; and
a sending unit 73, configured to send the information of the friendship circle released by the first user to a third user in the friendship circle of the second user if the judgement result of the judging unit 72 is yes, wherein the third user is not a user who belongs to the friendship circle of the first user.

The receiving unit 71 is further configured to receive a friendship circle permission opening request from the first user before receiving the information of the friendship circle released by the first user, wherein the above request is used to instruct the second user to open all or part of the designated friends in the friendship circle thereof as the third user to the first user.

The sending unit 73 is further configured to forward the friendship circle permission opening request to the second user.

The judging unit 72 is further configured to judge whether the request is accepted by the second user.

The device for forwarding information can further comprises:
a first recording unit 74, configured to record the first user and the third user in association with each other if the judgement result of the judging unit 72 is yes.

Alternatively, the receiving unit 71 is further configured to receive a friendship circle permission opening request from the second user before receiving the information of friendship circle released by the first user, the request is used to request to open all or part of the designated friends in the friendship circle of the second user as the third user to the first user.

The sending unit 73 is further configured to forward the friendship circle permission opening request to the first user.

The judging unit 72 is further configured to judge whether the request is accepted by the first user.

The device for forwarding information can further comprises:
a second recording unit 75, configured to record the first user and the third user in association with each other if the judgement result of the judging unit 72 is yes.

The sending unit 73 further comprises:
a searching module 731, configured to search for the user ID of the third user; and
a sending module 732, configured to send the information released by the first user to the third user by using the user ID of the third user as an index.

The judging unit 72 is further configured to judge whether the information released by the first user meets a preset releasing requirement before forwarding the information to the third user in the friendship circle of the second user.

The sending unit 73 is further configured to forward the information released by the first user to the third user if the judgement result of the judging unit 72 is yes.

Thus, the following scheme is achieved, that is, the receiving unit, configured to receive the information of the friendship circle released by the first user; the judging unit, configured to judge whether the second user in the friendship circle of the first user has opened his or her own friendship circle permission to the first user; and the sending unit, configured to send the information of the friendship circle released by the first user to the third user in the friendship circle of the second user if the judgement result of the judging unit is yes, wherein the third user is not a user who belongs to the friendship circle of the first user; wherein the sending unit is further configured to search for the second user and send the information released by the first user to the second user. By means of the scheme described above, after being released by the first user, the information can be sent to the friendship circle opened by the second user through the network server without performing operations (such as forward) by the second user, that is to say, users in the friendship circle opened by the second user can receive the information released by the first user, and the range of information propagation is expanded without increasing the operation cost.

Moreover, the second user can select the third user according to the first user and preset a releasing requirement, the information released by the first user will not be sent to the third user if it does not meets the preset releasing requirement, thus avoid spam being sent to the third user.

As described above, a person skilled in the art should be noted that the present invention can be implemented via hardware or preferably a combination of general hardware and software. Based on this, the essentials of the present invention or portions which contribute to the related art can be reflected in the form of software products, which can be recorded in a computer-readable recording medium such as floppy disk, hard disk, and optical disk of a computer, and instructions can be included to cause a machine (such as personal computer, server, or network apparatus etc.) to execute the methods described in the embodiments of the invention.

The foregoing descriptions are merely preferred embodiments of the present disclosure, rather than limiting the present disclosure. Various modifications and alterations can be made to the present disclosure for those skilled in the art. Any modification, equivalent substitution, improvement or the like made within the spirit and principle of the present disclosure shall fall into the protection scope of the present disclosure.

## Claims

1. A method for forwarding information, comprising:
receiving the information of the friendship circle released by a first user, by a network server;
judging whether a second user in the friendship circle of the first user has opened his or her own friendship circle permission to the first user; and
if yes, sending the information of the friendship circle released by the first user to a third user in the friendship circle of the second user, wherein the third user is not a user who belongs to the friendship circle of the first user.

2. The method of claim 1, wherein before the network server receives the information of the friendship circle released by the first user, the method further comprises:
receiving a friendship circle permission opening request sent from the first user, which is used to instruct the second user to open all or part of the designated friends in the friendship circle thereof as the third user to the first user;
forwarding the friendship circle permission opening request to the second user and judging whether the request is accepted by the second user; and
if yes, recoding the first user and the third user in association with each other.

3. The method of claim 1, wherein before the network server receives the information of the friendship circle released by the first user, the method further comprises:
receiving a friendship circle permission opening request sent from the second user, which is used to request to open all or part of the designated friends in the friendship circle of the second user as the third user to the first user;
forwarding the friendship circle permission opening request to the first user and judging whether the request is accepted by the first user; and
if yes, recoding the first user and the third user in association with each other.

4. The method of claim 1, wherein the step of sending the information of the friendship circle released by the first user to the third user in the friendship circle of the second user comprises:
searching for the user ID of the third user; and
forwarding the information released by the first user to the third user by using the user ID of the third user as an index.

5. The method of any of claims 1-4, wherein before sending the information of the friendship circle released by the first user to the third user in the friendship circle of the second user, the method further comprises:
judging whether the information released by the first user meets a preset releasing requirement; and
if yes, sending the information of the friendship circle released by the first user to the third user.

6. A device for forwarding information, comprising:
a receiving unit, configured to receive the information of the friendship circle released by a first user;
a judging unit, configured to judge whether a second user in the friendship circle of the first user has opened his or her own friendship circle permission to the first user; and
a sending unit, configured to send the information of the friendship circle released by the first user to a third user in the friendship circle of the second user if the second user has opened his or her own friendship circle permission to the first user, wherein the third user is not a user who belongs to the friendship circle of the first user.

7. The device of claim 6, wherein the receiving unit is further configured to receive a friendship circle permission opening request sent from the first user before receiving the information of the friendship circle released by the first user, wherein the friendship circle permission opening request is used to instruct the second user to open all or part of the designated friends in the friendship circle thereof as the third user to the first user;
the sending unit is further configured to forward the friendship circle permission opening request to the second user;
the judging unit is further configured to judge whether the request is accepted by the second user; and
the device further comprises:
a first recording unit, configured to record the first user and the third user in association with each other if the judging unit determines that the request is accepted by the second user.

8. The device of claim 6, wherein the receiving unit is further configured to receive a friendship circle permission opening request sent from the second user before receiving the information of the friendship circle released by the first user, wherein the request is used to request to open all or part of the designated friends in the friendship circle of the second user as the third user to the first user;
the sending unit is further configured to forward the friendship circle permission opening request to the first user;
the judging unit is further configured to judge whether the request is accepted by the first user; and
the device further comprises:
a second recording unit, configured to record the first user and the third user in association with each other if the judging unit determines that the request is accepted by the first user.

9. The device of claim 6, wherein the sending unit comprises:
a searching module, configured to search for the user ID of the third user; and
a sending module, configured to send the information released by the first user to the third user by using the user ID of the third user as an index.

10. The device of any of claims 6-9, wherein the judging unit is further configured to judge whether the information released by the first user meets a preset releasing requirement before sending the information released by the first user to the third user in the friendship circle of the second user; and
the sending unit is further configured to sending the information released by the first user to the third user if the preset releasing requirement is met.
